# FASCICULE DE BREVET EUROPEEN

(11) **EP 2 369 222 B1**
(45) Date de publication et mention de la délivrance du brevet: **16.01.2013**
(21) Numéro de dépôt: 11305179.1
(22) Date de dépôt: 22.02.2011
(51) Int. Cl.: F17D 1/17

(54) **Procédé d'augmentation du débit de transport du pétrole depuis le puits producteur**
Verfahren zur Erhöhung des Ölflusses von der Bohrung
Process for increasing oil transport flow from well

(30) Priorité: 22.03.2010 FR 1052029
(43) Date de publication de la demande: 28.09.2011
(73) Titulaire: S.P.C.M. SA, 42160 Andrezieux Boutheon (FR)
(72) Inventeur: Kieffer, Jacques, 42530, SAINT-GENEST-LERPT (FR)
(74) Mandataire: Denjean, Eric

(56) Documents cités:
- US-A- 4 918 123
- US-A1- 2005 049 327

## Description

La présente invention concerne un procédé pour augmenter le débit auquel une suspension de pétrole est transportée à partir du puits producteur en améliorant la réduction de frottement. Le procédé s'applique plus particulièrement à la production sous-marine de pétrole, par exemple par le biais de plateformes « offshore ».

La réduction de frottement par addition de quantités limitées de polymère hydrosoluble a été découverte par B.A Tom's en 1946. On parle du « Tom's effect », aussi appelé « drag réduction ». Cette addition en très faible quantité de polymère hydrosoluble permet de diminuer la résistance hydraulique lorsque le fluide circule dans un régime normalement turbulent, et donc d'améliorer son écoulement. Cela peut se traduire concrètement par l'amélioration de l'écoulement dans des canalisations comme par exemple dans le pompage d'eau d'injection sur les champs pétroliers, ou dans la production de pétrole lorsque les quantités d'eau produites sont de plus en plus importantes au fil de l'exploitation du puits (par exemple lorsque le watercut est supérieur à 80%).

Au fur et à mesure de l'exploitation du puits de pétrole, la quantité de pétrole produite diminue et celle d'eau récupérée augmente. De manière évidente, pour un même débit de canalisation de production, il devient moins rentable d'exploiter les champs pétroliers.

C'est pourquoi il est nécessaire d'augmenter le débit de transport du puits producteur dans lequel circule alors le mélange pétrole (et/ou gaz) et eau provenant de l'injection. Pour cela il est possible d'utiliser la technique de « drag réduction », qui permet d'augmenter le débit d'eau de 20 à 30% dans les canalisations de transport en rajoutant de petites quantités de polymères dans cette suspension de pétrole dans l'eau.

Le document US 2005/0049327 A1 décrit un procédé de réduction de friction mettant en oeuvre un polymère anionique hydrophile. Ce polymère peut être introduit sous forme de dispersion dans un hydrocarbure ou en émulsion de type eau dans huile, l'huile étant un hydrocarbure.

Il existe un intérêt d'utiliser cette technique de « drag réduction », :
- à terre sur les tuyauteries de transport lorsque les puits producteurs sont éloignés des installations de séparation,
- en mer (offshore) en injectant le polymère dans la tuyauterie de production au fond de la mer, à des profondeurs de 100 à 3,000 mètres et sur des distances pouvant aller à plusieurs kilomètres.

Dans ce dernier cas, une tuyauterie annexe pompe le polymère, sous forme d'émulsion, jusqu'à la tête du puits producteur, la dissolution du polymère s'effectuant en ligne. Les quantités injectées sont de l'ordre de 20 à 50 ppm et les canalisations et les systèmes de pompage ont été calculés pour de telles quantités.

Les polymères les plus utilisés sont des polyacrylamides anioniques polymérisés en émulsion inverse avec une concentration de polymère d'environ 30% massique.

Les émulsions inverses sont caractérisées par le fait que :
1° Leur viscosité n'est pas newtonienne et diminue avec le cisaillement.
2° La viscosité ne varie pas linéairement avec la concentration de polymère

Dans le cas où ces installations sont déjà en place, cette opération est limitée car les matériels ont été calculés pour une réduction déterminée du frottement. De plus, la température de l'eau de mer (4°C environ) limite le débit de l'installation.

Une solution pour augmenter le débit de pétrole à partir de puits producteurs, sur une installation pré-existante, est donc d'injecter plus de polymère.

Pour injecter plus de polymère, étant donné que la viscosité est dépendante de la concentration, il est nécessaire de fournir sur la plateforme ou le FPSO (Floating Production Storage & Offloading) une émulsion moins visqueuse et donc diluée. Mais dans ce cas, l'émulsion décante très rapidement et forme des couches visqueuses prenant en masse au fond des conteneurs de transport. Les installations sur plateformes ou les FPSO ne permettent pas de ré-homogénéiser dans les conditions locales d'opération. Cette solution n'est donc pas viable d'une manière pratique.

Le problème technique que se propose de résoudre l'invention est, sur une installation existante, d'injecter plus de polymère dans la tuyauterie de production afin d'augmenter le débit dans le transport du pétrole à partir de puits producteurs.

L'invention consiste à diluer le polymère au moyen d'un non solvant se trouvant sur toutes les plateformes et FPSO, et particulièrement du fioul servant aux différents moteurs thermiques (propulsion, électricité, compresseurs, chauffage...).

Plus particulièrement, l'invention a pour objet un procédé dans lequel le polymère injecté pour réduire les frottements est dilué au préalable avec du fioul, permettant ainsi de diminuer la viscosité du mélange, d'augmenter les débits d'injection et au final d'augmenter la quantité de matière active de polymère injecté.

Le fioul est particulièrement adapté car présent sur toutes les plateformes « offshore ».

En d'autres termes, l'invention a pour objet un procédé pour augmenter, sur une installation existante, la quantité de polymère hydrosoluble injectée en émulsion dans des canalisations de transport de pétrole produit à partir de puits de pétrole sous marin.

Le procédé se caractérise en ce que avant son injection, on dilue l'émulsion avec du fioul présent sur la plateforme ou l'unité flottante de production, de stockage et de déchargement (FPSO).

Ainsi, en injectant un mélange polymère/fioul, même si on diminue légèrement la concentration du polymère, on diminue suffisamment la viscosité pour augmenter significativement la quantité de matière active injectée en raison de l'augmentation du débit d'injection.

Selon l'invention, le puits producteur est relié à une plateforme offshore ou à un FPSO (unité flottante de production, de stockage et de déchargement) par une canalisation de grande longueur.

Selon une première caractéristique, le polymère hydrosoluble se présente sous la forme d'une émulsion inverse.

Dans un premier mode de réalisation :
- le fioul est injecté au moyen par exemple d'une pompe volumétrique, dans la canalisation existante d'amenée du polymère, avant la pompe de dosage dudit polymère en émulsion,
- le mélange polymère/fioul est ensuite dosé au moyen de la pompe doseuse du polymère en émulsion,
- le mélange ainsi dosé est alors homogénéisé au moyen par exemple d'un mélangeur statique permettant une bonne homogénéisation des fluides,
- le mélange homogénéisé ainsi obtenu est enfin injecté dans la canalisation de transport du pétrole produit en tête de puits de production.

Dans un second mode de réalisation :
- le polymère en émulsion est dosé au moyen par exemple d'une pompe doseuse,
- puis le fioul est injecté, dans la canalisation transportant le polymère dosé au moyen par exemple d'une pompe volumétrique,
- le mélange polymère/fioul est ensuite homogénéisé au moyen par exemple d'un mélangeur statique,
- le mélange homogénéisé ainsi obtenu est enfin injecté dans la canalisation de transport de la suspension de pétrole produit en tête de puits de production.

Le polymère hydrosoluble ainsi transporté, se présentant de préférence sous la forme d'une émulsion inverse est avantageusement dilué avec un ajout de 1 à 40% massique de fioul, préférentiellement de 5 à 20%.

Les polymères préférés pour l'invention sont des polyacrylamides anioniques polymérisés en émulsion inverse avec une concentration de polymère avantageusement d'environ 30% massique. Ils ont une anionicité (rapport acrylamide/ acrylate de Na) de l'ordre de 20 à 40% et un poids moléculaire de 10 à 25 millions de g/mol.

Dans un mode de réalisation préféré, le polymère hydrosoluble est injecté sous forme d'une émulsion inverse comprenant un polymère anionique 70-30 acrylamide-acrylate de sodium à une concentration de 30%, de poids moléculaire 20 millions.

La production de ces polymères sous forme d'émulsion inverse comprend, en pratique, les étapes suivantes :
- dissolution des monomères dans de l'eau à une concentration voisine de 50%,
- dissolution de tensio- actifs à faible HLB (Balance Hydrophile-Hydrophobe) dans un hydrocarbure,
- émulsification par un moyen mécanique de la phase aqueuse dans la phase huile,
- dégazage sous vide ou par injection d'azote pour éliminer de l'oxygène,
- addition de catalyseur redox et/ou azoïque et maintien de la réaction à température constante (par ex 50°C) pendant la durée de la polymérisation d'environ 3 à 5 heures, ou par une méthode adiabatique,
- après la réaction, addition de tensio-actifs à fort HLB permettent l'inversion de l'émulsion et sa dissolution au contact avec l'eau.

Ce procédé est décrit dans de nombreux brevets dont le brevet US 4918123.

L'invention et les avantages qui en découlent ressortent des exemples de réalisation suivants à l'appui de la figure annexée.

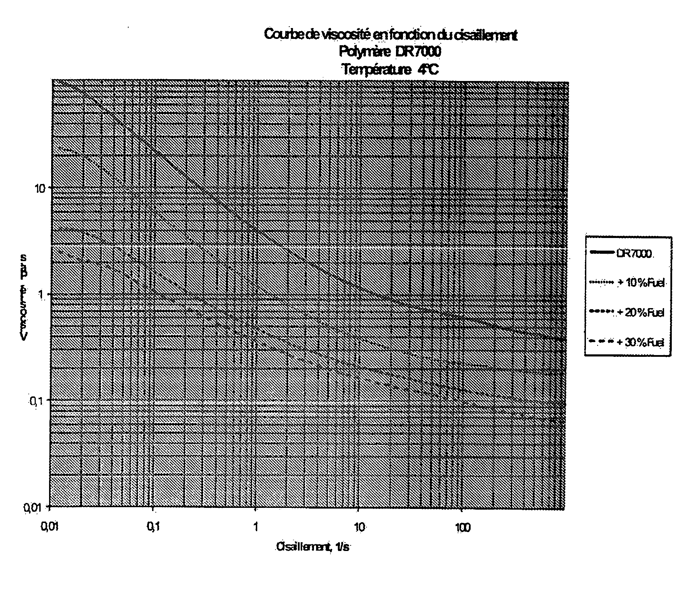

La figure 1 représente la courbe de viscosité d'un polymère hydrosoluble dilué avec du fioul en fonction du cisaillement. Cette courbe montre de manière connue que la viscosité du polymère hydrosoluble utilisé dans les exemples (DR7000) diminue lorsque le cisaillement augmente.

### Exemples

Le polymère hydrosoluble utilisé est une émulsion à 30% de matière active et 30 % d'anionicité poids moléculaire voisin de 20 millions (référencé DR 7000 par la société SNF SAS). Par nature, les émulsions sont instables et ont tendance à décanter. Pour obtenir une émulsion stable il faut un rapport précis de volume de phase aqueuse par rapport à la phase huile ainsi que des mélanges de tensio-actifs qui empêchent la décantation de la phase aqueuse dans la phase huile. Ceci se traduit par une viscosité minimum de l'émulsion mesuré au Brookfield de 2000 cps.

Un test pilote a été mis en place en utilisant une pompe Triplex à vitesse variable pompant l'émulsion telle quelle ou diluée dans un tube de 100 mètres de longueur.

Exemple 1 : diamètre de la tuyauterie : 1 pouce, diamètre intérieur : 25,0 mm. Dans un premier temps, on pompe l'émulsion telle quelle à une vitesse de 0,063m/seconde (soit 0,11 m³/h) qui est la vitesse moyenne pour des pompages à longue distances.

La perte de charge constatée est de 2,7 bars/100m.

On pompe ensuite les émulsions diluées par ajout de 10% et 20% de fioul en mesurant le débit avec la même perte de charge de 2,7 bars/100 m. Les résultats sont les suivants :

| Emulsion | Débit | Perte de charge | Matière active horaire |
|---|---|---|---|
| Non diluée | 0,11 m³/h | 2,7 bars | 33 kg |
| Diluée 10% | 0,37 m³/h | 2,7 bars | 100 kg |
| Diluée 20% | 0,78 m³/h | 2,7 bars | 187 kg |

Le débit horaire peut facilement être multiplié par 7 en utilisant la même pompe et les mêmes canalisations d'injection. Ce qui permet malgré la dilution d'injecter 5 fois plus de polymère sous forme de matière active dans la tuyauterie.

Exemple 2 : diamètre de la tuyauterie : 2 pouces, diamètre intérieur : 52,5 mm.

Les résultats sont les suivants :

| | Débit | Perte de charge | Matière active horaire |
|---|---|---|---|
| Non diluée | 1 m³/h | 1,2 bar | 300 kg/h |
| Diluée 10% | 3,2 m³/h | 1,2 bar | 864 kg/h |
| Diluée 20% | 6,7 m³/h | 1,2 bar | 1608 kg/h |

Cet exemple confirme les résultats de l'exemple 1.

Au point de vue pratique la quantité de fioul nécessaire à la dilution peut être injectée par une pompe volumétrique directement avant ou après la pompe à polymère en respectant les pressions nécessaires, les deux liquides passant ensuite dans un mélangeur statique type SULZER SMX donnant une perte de charge de 1 bar environ.

## Revendications

1. Procédé pour augmenter, sur une installation existante, la quantité de polymère hydrosoluble injectée en émulsion dans des canalisations de transport de pétrole produit à partir de puits de pétrole sous marin **caractérisé en ce que** avant son injection, on dilue l'émulsion avec du fioul présent sur la plateforme ou une unité flottante de production, de stockage et de déchargement (FPSO).

2. Procédé selon la revendication 1, **caractérisé en ce que** le polymère hydrosoluble injecté est en émulsion inverse.

3. Procédé selon la revendication 1, **caractérisé en ce que** le fioul représente entre 1 et 40% massique de l'émulsion, préférentiellement de 5 à 20%.

4. Procédé selon la revendication 1, **caractérisé en ce que** :
- le fioul est injecté dans la canalisation existante d'amenée du polymère, avant la pompe de dosage dudit polymère en émulsion,
- le mélange polymère/fioul est ensuite dosé au moyen de la pompe doseuse du polymère en émulsion,
- le mélange ainsi dosé est alors homogénéisé,
- le mélange homogénéisé ainsi obtenu est enfin injecté dans la canalisation de transport du pétrole produit en tête de puits de production.

5. Procédé selon la revendication 1, **caractérisé en ce que** :
- le polymère en émulsion est dosé,
- puis le fioul est injecté, dans la canalisation transportant le polymère dosé,
- le mélange polymère/fioul est ensuite homogénéisé,
- le mélange homogénéisé ainsi obtenu est enfin injecté dans la canalisation de transport de la suspension de pétrole produit en tête de puits de production.

6. Procédé selon la revendication 1, **caractérisé en ce que** le polymère hydrosoluble est un polymère anionique 70-30 acrylamide-acrylate de sodium à une concentration de 30%, de poids moléculaire 20 millions, en émulsion inverse.

## Claims

1. Process for increasing, on an existing installation, the amount of water-soluble polymer in an emulsion injected into the pipelines transporting oil produced at offshore oil wells, wherein before injection, the emulsion is diluted with fuel oil found on the platform or Floating Production Storage & Offloading unit (FPSO).

2. Process as claimed in claim 1, wherein the water-soluble polymer injected is in a reverse emulsion.

3. Process as claimed in claim 1, wherein the fuel oil represents between 1 and 40% of the emulsion by weight, preferably between 5 and 20%.

4. Process as claimed in claim 1, wherein:
- the fuel oil is injected into the existing polymer feeder pipeline before the metering pump for said emulsion polymer;
- the polymer/fuel oil mixture is then metered with the emulsion polymer metering pump;
- the mixture thus metered is then homogenized;
- lastly, the homogenized mixture obtained is injected into the pipeline transporting the oil produced at the producing well head.

5. Process as claimed in claim 1, wherein:
- the emulsion polymer is metered;
- the fuel oil is then injected into the pipeline transporting the metered polymer;
- the polymer/fuel oil mixture is then homogenized;
- lastly, the homogenized mixture thus obtained is injected into the pipeline transporting the oil suspension produced at the producing well head.

6. Process as claimed in claim 1, wherein the water-soluble polymer is an anionic polymer, 70-30 acrylamide-sodium acrylate, at a concentration of 30%, with a molecular weight of 20 million, in reverse emulsion.

## Patentansprüche

1. Verfahren, um in einer vorhandenen Anlage die Menge an wasserlöslichem Polymer zu erhöhen, die emulgiert in Leitungen für die Beförderung von aus Erdölbohrlöchern im Meer gewonnenem Erdöl eingespeist wird, **dadurch gekennzeichnet, dass** vor der Einspeisung die Emulsion mit auf der FPSO-Plattform bzw. -Schwimmeinheit vorhandenem Diesel- bzw. Heizöl verdünnt wird.

2. Verfahren nach Anspruch 1, **dadurch gekennzeichnet, dass** das eingespeiste wasserlösliche Polymer in inverser Emulsion vorliegt.

3. Verfahren nach Anspruch 1, **dadurch gekennzeichnet, dass** das Diesel- bzw. Heizöl zwischen 1 und 40 Gew.-%, vorzugsweise 5 bis 20 Gew.-% der Emulsion ausmacht.

4. Verfahren nach Anspruch 1, **dadurch gekennzeichnet, dass**
- das Diesel- bzw. Heizöl in die vorhandene Polymerzuleitung vor der Pumpe für die Dosierung des emulgierten Polymers eingespeist wird,
- das Polymer-Dieselöl-Gemisch bzw. Polymer-Heizöl-Gemisch anschließend mittels der Pumpe für die Dosierung des emulgierten Polymers dosiert wird,
- das derart dosierte Gemisch anschließend homogenisiert wird,
- das derart erzielte homogenisierte Gemisch schließlich in die Leitung für die Beförderung des am Kopf des Förderbohrlochs gewonnenen Erdöls eingespeist wird.

5. Verfahren nach Anspruch 1, **dadurch gekennzeichnet, dass**
- das emulgierte Polymer dosiert wird,
- das Diesel- bzw. Heizöl anschließend in die Leitung für die Beförderung des dosierten Polymers eingespeist wird,
- das Polymer-Dieselöl-Gemisch bzw. Polymer-Heizöl-Gemisch anschließend homogenisiert wird,
- das derart erzielte homogenisierte Gemisch schließlich in die Leitung für die Beförderung der Suspension aus am Kopf des Förderbohrlochs gewonnenem Erdöl eingespeist wird.

6. Verfahren nach Anspruch 1, **dadurch gekennzeichnet, dass** das wasserlösliche Polymer ein anionisches Acrylamid-Natriumacrylat(70/30)-Polymer mit einer Konzentration von 30 % und einem Molekulargewicht von 20 Millionen in inverser Emulsion ist.
